Europäisches Patentamt

European Patent Office

Office européen des brevets

(19)

(11) Veröffentlichungsnummer : **0 091 021**
**B1**

# (12) EUROPÄISCHE PATENTSCHRIFT

(45) Veröffentlichungstag der Patentschrift :
26.06.85

(51) Int. Cl.⁴ : **C 09 D 3/80**, C 08 L 33/06

(21) Anmeldenummer : 83102918.6

(22) Anmeldetag : 24.03.83

(54) **Verfahren zur Herstellung von lösungsmittelhaltigen, wasserverdünnbaren, physikalisch trocknenden Bindemitteln und deren Verwendung.**

(30) Priorität : 02.04.82 DE 3212238

(43) Veröffentlichungstag der Anmeldung :
12.10.83 Patentblatt 83/41

(45) Bekanntmachung des Hinweises auf die Patenterteilung : 26.06.85 Patentblatt 85/26

(84) Benannte Vertragsstaaten :
**AT BE DE FR GB IT NL SE**

(56) Entgegenhaltungen :
EP-A- 0 043 911
EP-A- 0 044 399
US-A- 4 124 555

(73) Patentinhaber : **BASF Aktiengesellschaft**
**Carl-Bosch-Strasse 38**
**D-6700 Ludwigshafen (DE)**

(72) Erfinder : **Dersch, Rolf, Dr.**
**Albrecht-Duerer-Ring 16**
**D-6710 Frankenthal (DE)**
Erfinder : **Neubert, Gerhard, Dr.**
**Panoramastrasse 11**
**D-6719 Battenberg (DE)**

**Beschreibung**

Die vorliegende Erfindung betrifft ein Verfahren zur Herstellung lösungsmittelhaltiger, wasserverdünnbarer, physikalisch trocknender Bindemittel für Beschichtungs- und Imprägnierstoffe auf der Basis von Copolymerisaten aus (Meth)acrylsäureestern und damit copolymerisierbarer carboxylgruppenhaltigen Monomeren, die unter Verwendung von mit Wasser zumindest teilweise mischbaren Lösungsmitteln und Ammoniak als Neutralisationsmittel mit Wasser in stabile Dispersionen überführt werden sowie deren Verwendung.

Copolymerisate aus (Meth-)acrylsäureestern, (Meth-)acrylsäure und gegebenenfalls Vinylaromaten, die sich für derartige Anwendungen besonders eignen, sind beispielsweise in den DE-OSen 30 22 824 und 30 22 870 beschrieben. Beschichtungs- und Imprägnierstoffe auf dieser Basis zeichnen sich unter anderem durch hohe Hydrophobie unmittelbar nach dem Antrocknen, sehr geringe Wasseraufnanme nach dem Durchtrocknen, ausgezeichnete Beständigkeit gegen wäßrige Basen wie auch wäßriges Ammoniak und guten Korrosionsschutz aus. Mit diesen Copolymerisaten lassen sich Beschichtungen mit guter Blockfestigkeit, hoher Haftfestigkeit auf verschiedenen Untergründen, guter Witterungsbeständigkeit und hohem Glanz herstellen.

Trotzdem lassen Beschichtungs- und Imprägnierstoffe auf dieser Basis noch Wünsche offen. Aus Gründen der Wirtschaftlichkeit und Geringhaltung der Umweltbelastung sowie zur Beschleunigung der Trocknung wird angestrebt, den Anteil an organischen Lösungsmitteln und Wasser in diesen Stoffen so gering wie möglich zu halten. Diesem Ziel sind jedoch Grenzen gesetzt. Mit abnehmendem Gehalt an Lösungsmittel und Wasser wird das Fließverhalten der wäßrigen Stoffe immer unbefriedigender, so daß sich schließlich keine brauchbaren Fließeigenschaften sowie keine ausreichende Viskositäts- und Lagerstabilität mehr erreichen lassen. Die Beschichtungen neigen schon in verhältnismäßig dünner Schicht stark zum Ablaufen an senkrechten Flächen. Schließlich wird das Bindemittel in der wäßrigen Phase unlöslich bzw. bildet eine zweite Phase aus. Außer dem nimmt der Glanz der Anstriche ab. Diese Nachteile kommen umso stärker zur Auswirkung, je höhermolekular und je höher erweichend das Copolymerisat ist und je geringer der Lösungsmittelgehalt gewählt wird. Molekulargewicht und Erweichungspunkt können jedoch nicht beliebig gesenkt werden, weil schließlich keine klebfrei und blockfest physikalisch trocknende Beschichtungen mehr erhalten werden können. Nach Pigmentierung der Stoffe kommen diese Nachteile im allgemeinen noch stärker zur Auswirkung, insbesondere, wenn niedrig pigmentierte Glanzfarben hergestellt werden sollen.

Der vorliegenden Erfindung lag die Aufgabe zugrunde, ein Verfahren zur Herstellung wasserverdünnbarer, physikalisch trocknender Bindemittel aufzuzeigen, das eine Senkung des Lösungs- und Wassergehaltes zuläßt, ohne daß dadurch die oben beschriebenen Nachteile in Kauf genommen werden müssen.

Gegenstand der vorliegenden Erfindung ist ein Verfahren zur Herstellung von lösungsmittelhaltigen, wasserverdünnbaren, physikalisch trocknenden Bindemitteln für Beschichtungs- und Imprägnierstoffe auf der Basis von Copolymerisaten, die im wesentlichen bestehen aus einpolymerisierten Einheiten von

a) 80 bis 98,5 Gew.% mindestens eines Esters der Acrylsäure oder Methacrylsäure mit einem 1 bis 14 Kohlenstoffatome enthaltenden geradkettigen oder verzweigten Monoalkanol, wobei diese (Meth-)acrylsäureester bis zu 65 Gew.-% durch Vinylaromaten, copolymerisierbare Vinylester mit 4 bis 14 Kohlenstoffatomen oder copolymerisierbare olefinisch ungesättigte Dicarbonsäurediester mit 6 bis 32 Kohlenstoffatomen ersetzt sein können,

b) 1,5 bis 20 Gew.% mindestens einer copolymeriserbaren, olefinisch ungesättigten 3 bis 10 Kohlenstoffatome enthaltenden organischen Verbindung mit mindestens einer Carboxyl- oder Carbonsäureanhydridgruppe und

c) 0 bis 5 Gew.% weiterer, unter a) und b) nicht genannter copolymerisierbarer olefinisch ungesättigter organischer Verbindungen, die eine hydrophile Gruppe aufweisen,

mit der Maßgabe, daß die Summe der unter a) bis c) gegannten Prozentzahlen gleich 100 ist unter Verwendung von mit Wasser zumindest teilweise mischbaren organischen Lösungsmitteln und Ammoniak als Neutralisationsmittel, das dadurch gekennzeichnet ist, daß das Copolymerisat die Komponenten a), b) und c) in einem solchen Verhältnis einpolymerisiert enthält, daß das Copolymerisat der Formel

$$100 \cdot \log SZ + 1{,}6 \cdot \Sigma E = Sw$$

entspricht, worin SZ die Säurezahl in mg KOH/g Copolymerisat und $\Sigma E$ die Summe des Anteils an Estergruppen E in Gew.% im Copolymerisat bedeuten, wobei E für Ester (a) der in $\alpha$-Stellung verzweigten Alkanole mit dem Faktor 0,7 bzw. für Ester (a) der in $\beta$-Stellung verzweigten Alkanole mit dem Faktor 0,8 zu multiplizieren ist, einen Wert für Sw zwischen 155 und 179, einen K-Wert nach DIN 53 726 zwischen 23 und 60 und einen Erweichungspunkt nach DIN 53 180 zwischen 55 und 160 °C aufweist, in 15 bis 70 Gew.%, bezogen auf Copolymerisat, eines flüchtigen wassermischbaren Glykolethers mit einer primären Hydroxylgruppe, mindestens 6 Kohlenstoffatomen sowie einem Verhältnis von Kohlenstoffatomen zu Sauerstoffatomen von mindestens 2,3 gelöst und durch Vermischen mit Ammoniak und Wasser in eine wäßrige Dispersion überführt wird.

Eine weitere Ausbildung des erfindungsgemäßen Verfahrens besteht darin, daß 99 bis 25 Gew.% des

2

Copolymerisats mit einem Wert für Sw zwischen 155 bis 179 in Form der wäßrigen Dispersion mit 1 bis 75 Gew.% eines Copolymerisats, das einen K-Wert nach DIN 53 726 zwischen 10 und 45 sowie einen Wert für Sw zwischen 185 und 230 aufweist, und gegebenenfalls durch Zugabe von Ammoniak in eine Lösung überführt wurde, kombiniert werden.

Gegenstand der vorliegenden Erfindung ist außerdem die Verwendung der erfindungsgemäß hergestellten Bindemittel bzw. Bindemittelkombinationen zur Herstellung physikalisch trocknender Beschichtungs- und Imprägnierstoffe.

Das erfindungsgemäße Verfahren ermöglicht es, Beschichtungs- und Imprägnierstoffe herzustellen, die sich gegenüber denen in den DE-OSen 30 22 824 und 30 22 870 beschriebenen durch günstigeres Fließverhalten bei geringem Lösungsmittelgehalt und hohem Feststoffgehalt sowie bessere Standfestigkeit dicker Beschichtungen an senkrechten Flächen, höheren Glanz, bessere mechanische Eigenschaften und schnellere Trocknung auszeichnen.

Die Vorteile kommen besonders bei niedrig pigmentierten Beschichtungsstoffen zur Auswirkung. Das Verfahren erlaubt also besonders lösungsmittelarme und feststoffreiche Beschichtungsstoffe mit günstigen Fließeigenschaften und hohem Glanz herzustellen.

Zu den Aufbaukomponenten der erfindungsgemäß zu verwendenden Copolymerisate ist folgendes auszuführen :

a) Als Ester der Acrylsäure oder Methacrylsäure mit einem 1 bis 14 Kohlenstoffatome enthaltenden geradkettigen oder verzweigten Monoalkanolen eignen sich z. B. Methylacrylat, Ethylacrylat, Isopropylacrylat, Methylmethacrylat, n-Butylacrylat, n-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat, Isobutylacrylat und 2-Ethylhexylacrylat.

Als Vinylaromaten, durch die die (Meth-)acrylsäureester teilweise ersetzt sein können, eignen sich z. B. Vinyltoluol und vorzugsweise Styrol, die bis zu 65, vorzugsweise 20 bis 50 Gew.% der (Meth-)acrylsäureester ersetzen können.

Die (Meth-)acrylsäureester können auch teilweisedurch Vinylester mit 4 bis 14 Kohlenstoffatomen oder copolymerisierbare olefinisch ungesättigte Dicarbonsäurediester mit 6 bis 32 Kohlenstoffatomen ersetzt sein. Als Vinylester kommen beispielsweise Vinylacetat, Vinylpropionat und als Dicarbonsäurediester solche der Maleinsäure, z. B. deren Di-n-butyl oder Di-isobutylester in Frage, durch die beispielsweise 0 bis 50, vorzugsweise 0 bis 20 Gew.% der (Meth-)acrylsäureester ersetzt sein können.

Komponente (a) besteht vorzugsweise aus einer Mischung von mindestens einem hart machenden Monomeren (al), wie z. B. Methylmethacrylat, Isobutylmethacrylat, tert.-Butylacrylat oder Styrol und mindestens einem weichmachenden Monomeren (a2), wie z. B. Acrylsäureestern der $C_2$- bis $C_{14}$-Monoalkohole.

Bevorzugte Komponenten (al) sind tert.-Butylacrylat, in Mengen zwischen 30 und 90 Gew.% einpolymerisiert, Isobutylmethacrylat, in Mengen zwischen 25 und 95 %, vorzugsweise 35 bis 80 % einpolymerisiert, Methyl-Methacrylat und Styrol sowie Mischungen dieser in Mengen zwischen 25 und 60 % der Komponente (a).

Bevorzugte Komponenten (a2) sind n-Butylacrylat und längerkettige (Meth)acrylsäureester. Besonders bevorzugt sind verzweigte Acrylsäureester, wie z. B. 2-Ethylhexylacrylat und besonders Isobutylacrylat. Komponente (a2) wird im allgemeinen in Mengen zwischen 30 und 80 %, vorzugsweise zwischen 45 und 70 % der Komponente (a) einpolymerisiert.

Komponente (a) ist im erfindungsgemäßen Copolymerisat in Mengen von 80 bis 98,5, vorzugsweise 96 bis 98 Gew.% einpolymerisiert.

b) Als Komponente (b) kommen copolymerisierbare olefinisch ungesättigte, 3 bis 10 Kohlenstoffatome enthaltende organische Verbindungen mit mindestens einer Carboxyl- oder Carbonsäureanhydridgruppe in Frage, wie z. B. Acrylsäure, Methacrylsäure, Maleinsäure, Itaconsäure bzw. die Anhydride oder Halbester dieser Dicarbonsäuren.

Die Anhydridgruppen der Copolymerisate können vor dem Neutralisieren mit Ammoniak, beispielsweise durch Erwärmen mit 1 bis 8 Kohlenstoffatome enthaltenden Alkoholen oder Glykolethern in die entsprechenden Halbestergruppen enthaltenten Copolymerisate übergeführt werden. Beispiele für solche Alkohole bzw. Glykolether sind Ethanol, Isopropanol, Butanol und Butylglykol.

Bevorzugte Komponenten (b) sind Acrylsäure, Itaconsäure und Maleinsäureanhydrid. Komponente (b) ist im Copolymerisat in Mengen von 1,5 bis 20, vorzugsweise 2 bis 9 Gew.% einpolymerisiert.

c) Bei der Komponente (c) handelt es sich um weitere, unter (a) und (b) nicht genannte copolymerisierbare, olefinisch ungesättigte organische Verbindungen, die eine hydrophile Gruppe aufweisen, und gegebenenfalls in Mengen bis zu 5 Gew.% im Copolymerisat einpolymerisiert sein könner. Es sind dies beispielsweise Mono-(meth)-acrylate von Alkandiolen, wie Hydroxyethyl- und Hydroxypropyl (meth)acrylat sowie Butandiomono-(meth)acrylat, (Meth)acrylamid und/oder (Meth)acrylnitril. Diese Monomeren können, falls erforderlich, zur Einstellung spezieller Eigenschaften dienen. Copolymere, die weniger als 2 %, insbesondere frei von Komponente (c) sind, werden jedoch bevorzugt.

Die Summe der unter (a) bis (c) genannten Prozentzahlen ist 100.

Das für das erfindungsgemäße Verfahren zu verwendende Copolymerisat weist einen K-Wert nach DIN 53 726 von 23 bis 60, vorzugsweise 27 bis 50, insbesondere 30 bis 40 auf. Das gegebenenfalls damit zu kombinierende Copolymerisat weist einen K-Wert von 10 bis 45, vorzugsweise 20 bis 40, insbesondere 23 bis 35 auf.

Die Komponenten (a) und (b) sind in einem solchen Verhältnis einpolymerisiert, daß das Copolymerisat einen Wert für

$$Sw = 100 \cdot \log SZ + 1{,}6 \cdot \Sigma E$$

von 155 bis 179, vorzugsweise 170 bis 178, aufweist, wobei SZ die Säurezahl in mg KOH/g und $\Sigma E$ die Summe des Anteils an Estergruppen E in Gew.% im Copolymerisat bedeuten. Soweit die Ester der Acryl- oder Methacrylsäure nur Monoalkohole mit 1 bis 1- Kohlenstoffatomen enthalten, die nicht in $\alpha$-oder $\beta$-Stellung verzweigt sind, wird der Wert E unverändert eingesetzt.

Für den Anteil an Estergruppen, die in $\alpha$-oder $\beta$-Stellung zur Estergruppierung Kettenverzweigung aufweisen, erniedrigt sich der Wert E, und zwar für in $\alpha$-Stelung verzweigte Alkanolester z. B. tert.-Butylacrylat um 30 % und für in $\beta$-Stellung verzweigte Alkanolester (z. B. Isobutyl-(meth)-acrylat und 2-Ethylhexylacrylat) um 20 %.

Für den Estergruppenanteil von in $\alpha$-Stellung verzweigten Alkanolestern, z. B. tert.-Butylacrylat, des Copolymeren ist somit der Betrag

$$E = (\text{Gew.\% COO-Esteranteil})/100 \cdot 70$$

einzusetzen. Entsprechend ist für in $\beta$-Stellung verzweigte Alkanolester, z. B. für Isobutylmethacrylat bzw. Isobutylacrylat und 2-Ethylhexylacrylat

$$E = (\text{Gew.\% COO-Esteranteil})/100 \cdot 80$$

Der Wert Sw des Copolymerisates, das gegebenenfalls mit dem erfindungsgemäß zu verwendenden zu kombinieren ist, beträgt 185 bis 230, vorzugsweise 195 bis 215, insbesondere 200 bis 210. Die Kombination der Copolymerisate mit unterschiedlichen Werten für Sw in Form einer Dispersion und einer Lösung ermöglicht die Herstellung von Beschichtungsstoffen mit nur relativ geringer Abhängigkeit des Fließverhaltens, des Glanzes und der Standfestigkeit an senkrechten Flächen vom Neutralisationsgrad der Copolymerisate.

Es lassen sich Beschichtungsstoffe mit relativ hohem Neutralisationsgrad (hohem pH-Wert, hoher Strukturviskosität) und dennoch niedrigem Lösungsmittel- und Wassergehalt (hohem Glanz und gutem Verlauf) herstellen. Die Beschichtungsstoffe können mit wesentlich besserer Reproduzierbarkeit der Eigenschaften hergestellt werden. Bei Sw-Wert-Differenzen von > 40 ist die Verträglichkeit der beiden Copolymerisate vermindert. Pigmentierte Stoffe neigen zur Flokkung und können verminderten Glanz aufweisen. Außerdem ist die Wasserbeständigkeit der Beschichtungen dann geringer.

Die erfindungsgemäß zu verwendenden Copolymerisate haben Erweichungspunkte nach DIN 53 180 zwischen 55 und 160, vorzugsweise 65 und 150, insbesondere 75 und 110 °C.

Die Monomerenzusammensetzungen der zu kombinierenden Copolymerisate mit unterschiedlichen Sw-Werten werden so aufeinander abgestimmt, daß bei der Verfilmung der Mischungen in Form der Beschichtungs- und Imprägnierstoffe, klare, glänzende Filme erhalten werden. Das gelingt am sichersten, wenn nur der Mengenanteil der Komponente (b) auf Kosten der Menge (a) verändert wird. Das Copolymerisat läßt sich auf übliche Weise herstellen, bevorzugt durch Substanz- oder Lösungspolymerisation.

Besonders bevorzugt ist die Polymerisation in Gegenwart zumindest eines Teils des zum Lösen der Copolymerisate erforderlichen Glykolethers.

Als flüchtige, wassermischbare Glykolether mit mindestens 6 C-Atomen und einem Verhältnis von C-Atomen zu O-Atomen von mindestens 2,3 zum Lösen des Copolymerisates (A) eignen sich beispielsweise Alkyl- und Alkoxyether des Ethylenglykols, der Propandiole oder der Butandiole mit Verdunstungszahlen nach DIN 53 170 kleiner als ca. 1 500, wie z. B. die Monoether des Ethylenglykols mit n-, isooder sec.-Butanol, die Monopropylether des Propylenglykols, die Monoethylether des Butylenglykols, die Methyl-, Ethyl- und Propylether der Dipropylenglykole. Bevorzugt sind diejenigen Glykolether, deren Verdunstungszahl zwischen 60 und 1 000, insbesondere zwischen 100 und 700 liegen und deren Verhältnis von C- zu O-Atomen mindestens 3,0 beträgt. Bevorzugt sind Butylglykole z. B. Ethylenglykolmono-n-Butylether.

Die Glykole können als alleinige Lösungsmittel oder aber als Gemische untereinander eingesetzt werden, wie z. B. Gemische aus Butylglykol und Dipropylenglykolmonomethylether im Mengenverhältnis von etwa 1 : 2 bos 10 : 1, insbesondere von 3 : 2 bis 4 : 1. Es können aber auch anteilig andere wassermischbare oder teilweise wassermischbare Lösungsmittel mitverwendet werden, wie z. B. Alkohole, deren Verhältnis von C- zu O-Atomen bevorzugt über 3,0 liegt. Beispiele für solche zumischbare Lösungsmittel sind die Butanole, wie z. B. tert.-Butanol, sec.-Butanol und n-Butanol.

Mit Wasser nicht mischbare Lösungsmittel, wie hochsiedende Aromaten, und stärker polare

4

wassermischbare Lösungsmittel können höchstens in untergeordneten Mengen mitverwendet werden. Sie verringern die Stabilität der Dispersionen und führen zur Ausflockung des Bindemittels bzw. zur 2-Phasenbildung.

Zur Herstellung der Dispersionen aus dem Copolymerisat werden 15 bis 70 Gew.% Lösungsmittel, bevorzugt 20 bis 60 Gew.%, insbesondere 25 bis 45 Gew.%, ganz besonders 30 bis 40 Gew.%, bezogen auf das Copolymerisat, verwendet, wobei ein Teil des Lösungsmittels vorzugsweise schon zur Durchführung der Polymerisation eingesetzt werden kann. Weicht man von der bevorzugten Menge der Glykolether ab, insbesondere in Richtung niedrigerer Anteile, so nimmt die Stabilität der Dispersionen ab. Ihre Herstellung ist erschwert. Außerdem werden erhöhte Mengen Wasser benötigt, um die Dispersionen herzustellen. Der Copolymerisatgehalt der erfindungsgemäß hergestellten Dispersionen kann zwischen etwa 25 % und 50 % betragen. In der bevorzugten erfindungsgemäßen Form liegt er jedoch zwischen 35 und 47 %, insbesondere zwischen 40 und 45 %. Das gegebenenfalls mitzuverwendende Copolymerisat wird im allgemeinen in größeren Mengen Lösungsmittel gelöst.

Als Neutralisationsmittel dient Ammoniak.

Die Dispersionen der Copolymerisate mit Sw-Werten unter 180 können pH-Werte zwischen etwa 7,2 und 10,0 aufweisen. Im allgemeinen liegen die pH-Werte jedoch zwischen 7,8 und 9,5.

Durch Nachneutralisation in Lösung überführbare Dispersionen weisen im allgemeinen einen pH-Wert zwischen 6,5 und 7,8, vorzugsweise zwischen 6,8 und 7,6 auf. Diese Copolymerisate sind vorzugsweise 17 bis 25 % neutralisiert.

Die gegebenenfalls erfindungsgemäß zu kombinierenden Copolymerisatlösungen weisen im allgemeinen einen pH-Wert von über 8,0 entsprechend einem Neutralisationsgrad von mindestens 60 % auf. Vorzugsweise betragen diese pH-Werte 8,5 bis 9,5.

Von dem als Neutralisationsmittel dienenden Ammoniak kann — zur Erzielung bestimmter Effekte — ein geringer Teil, zweckmäßig nicht mehr als 25 %, vorzugsweise nicht mehr als 10 % des für die Neutralisation erforderlichen Ammoniaks, durch organische Amine, insbesondere Triethylamin ersetzt werden. Solche Zusätze können die Wasserquellbarkeit und die Wasserdurchlässigkeit der Anstriche erhöhen.

Zur erfindungsgemäßen Herstellung der Dispersion aus dem Copolymerisat wird die gegebenenfalls noch heiße Lösung des Copolymerisats mit Ammoniak und Wasser bzw. mit wäßrigem Ammoniak vermischt. Um eine stabile erfindungsgemäße Dispersion zu erhalten, ist es vorteilhaft, die Ammoniakmenge bzw. den Neutralisationsgrad auf den Wert Sw des Copolymerisats und die Art und Menge des Lösungsmittels abzustimmen. Dabei ist zu berücksichtigen, daß der erforderliche Neutralisationsgrad mit steigendem Sw- Wert des Copolymerisats sowie steigendem Verhältnis C- zu O-Atome des Glykolethers bzw. mit zunehmendem Solvatationsvermögen des Lösungsmittels niedriger eingestellt werden kann. Bevorzugt sind diese Parameter in der Weise aufeinander abgestimmt, daß die Dispersion in einem weiten pH-Bereich unterhalb pH-Wert = 10, bevorzugt bis oberhalb pH 8,5, insbesondere schon oberhalb 8,0, entsteht und stabil bleibt, d. h. bei Ammoniakzugabe nur noch eine geringe Viskositätszunahme zeigt und insbesondere nicht geliert.

Bei Verwendung von 30 bis 45 Gew.% Butylglykol, berechnet auf Copolymerisat, beträgt Sw hierfür beispielsweise bevorzugt 165 bis 175. Für ein Gemisch von Butylglykol mit Dipropylenglykolmonomethylether im Mengenverhältnis von 3 : 2 bis 4 : 1 wird ein Wert für Sw zwischen 170 und 179 bevorzugt.

Gemische dieser Lösungsmittel benötigen dementsprechend dazwischen liegende bzw. noch höhere Werte für Sw zur Herstellung der Dispersion im bevorzugten pH-Bereich.

Die Herstellung der Dispersionen erfolgt vorteilhaft zunächst bei niedrigerem pH-Wert und anschließendes Nachneutralisieren mit verdünntem Ammoniak unter Anhebung des pH-Wertes und der Viskosität.

Die Viskosität der erfindungsgemäß hergestellten Dispersionen kann zwischen wenigen mPa.s bis zu mehr als 100 Pa.s betragen. Bevorzugt werden jedoch Werte zwischen 0,2 Pa.s und 100 Pa.s, insbesondere 0,5 und 8 Pa.s, um gute Lagerstabilität zu gewährleisten und ein Absetzen der Dispersionsteilchen zu verhindern. Bei höheren Viskositäten weisen die Dispersionen starke Strukturviskosität auf.

Zur erfindungsgemäßen Herstellung der Dispersionen werden die zur Stabilisierung üblicher Dispersionen erforderlichen wasserlöslichen und wasseraffinen Hilfsstoffe, wie Schutzkolloide und Emulgatoren nicht benötigt. Beschichtungen und Imprägnierungen auf Basis der erfindungsgemäßen Dispersionen zeichnen sich daher schon nach kurzem Antrocknen durch hervorragende Hydrophobie und nach Durchtrocknung durch besonders gute Wasserquellbeständigkeit aus.

Die erfindungsgemäß hergestellten Dispersionen können als alleinige Bindemittel zur Herstellung der Beschichtungs- und Imprägnierstoffe dienen. Zur Einarbeitung von Pigmenten und Füllstoffen können zwar Dispergierhilfsstoffe verwendet werden, wie sie beispielsweise zur Herstellung von Dispersionsanstrichstoffen üblich sind ; diese verringern jedoch im allgemeinen die Wasserfestigkeit und Wasserquellbeständigkeit der Beschichtungen beträchtlich. Außerdem können sie den Glanz der Beschichtungen beeinträchtigen oder zur Koagulation der erfindungsgemäßen Bindemittel führen.

Zur Herstellung pigmente- und füllstoffenthaltender Beschichtungsstoffe werden Kombinationen mit gegebenenfalls wasserhaltigen zumindest zu 60 %, vorzugsweise zu mehr als 90 %, neutralisierten Lösungen von Copolymerisaten mit Werten für Sw zwischen 185 und 230 vorgezogen, wie sie in DE-OS 30 22 824 und 30 22 870 beschrieben sind. Die Pigmente und Füllstoffe werden dann zweckmäßigerweise vor dem Vermischen der beiden Bindemittelkomponenten vorzugsweise in der neutralisierten gegebenenfalls wasserhaltigen Lösung dieser Copolymerisate dispergiert.

Das Gewichtsverhältnis der beiden Copolymerisate mit Werten für Sw zwischen 155 und 179 bzw. zwischen 185 und 230 beträgt im allgemeinen von 99 bis 25 zu 1 bis 75, vorzugsweise von 95 bis 50 zu 5 bis 50, insbesondere 90 bis 70 zu 10 bis 30.

Mit zunehmender Pigmentierung ist es im allgemeinen vorteilhaft, den Anteil der Copolymerisatlösung zu erhöhen.

Für die erfindungsgemäße Herstellung der Beschichtungsstoffe können neben Pigmenten und Füllstoffen, wie Titandioxid, Eisenoxide, Chromoxide, Bariumsulfat, Ruß, Calcite, Dolomit, Talkum, Aluminiumbronze und organische Pigmente, auch andere in der Lacktechnologie übliche Hilfsstoffe, wie beispielsweise Entschäumer, Netzmittel, Antiabsetz- bzw. Thixotropiermittel, Verdicker, Gleitmittel und geringe Anteile Weichmacher mitverwendet werden.

Die Verarbeitung der erfindungsgemäßen Überzugs- und Imprägniermittel erfolgt nach üblichen Methoden, wie Streichen, Spritzen, Rollen, Gießen, Tauchen und Walzen. Beispiele für die Anwendung der erfindungsgemäßen Produkte sind Klarlacke und pigmentierte Anstrichstoffe zum Schutz verschiedenartiger Substrate, wie z. B. von Stahl oder anderen Metallen, von Mauerwerk, Beton, Asbestzement, Holz, bestehenden Anstrichen auf anderer Basis und Kunststoffen gegen atmosphärische und andere Einflüsse. Andere Einsatzgebiete sind

— Verfestigung und Hydrophobierung saugender mineralischer Untergründe
— Straßenmarkierungsfarben
— Beschichtungen von Teerpappe, Flachdächern und Dachziegeln.

Folgende Beispiele sollen den Gegenstand der vorliegenden Erfindung näher erläutern, ohne diesen einzuschränken.

Die in den Beispielen angegebenen Teile bzw. Prozente beziehen sich, wenn nicht anders angegeben, auf das Gewicht.

I. Herstellung der Dispersionen der Copolymerisate :

Abkürzungen :

MMA = Methylmethacrylat
BA = Butylacrylat
i-BA = Isobutylacrylat
St = Styrol
ITS = Itaconsäure
AS = Acrylsäure
BG = Butylglykol
DPM = Dipropylenglykolmonomethylether
NH$_3$ konz. = konzentrierter Ammoniak (25 %ig)
t-BPB = t-Butylperbenzoat

## Beispiel 1

20 Teile einer Monomerenmischung aus 50 Teilen St, 46 Teilen iBA und 4 Teilen AS in 4 Teilen BG werden unter Stickstoff auf 100 °C erwärmt und 10 % einer Lösung von 1,2 Teilen t-BPB in 16 Teilen BG zugegeben. Nach 10 Minuten werden weitere 80 Teile der obigen Monomerenmischung innerhalb von 2 Stunden und gleichzeitig die restlichen 90 % der t-BPB-Lösung innerhalb von 2 1/2 Stunden gleichmäßig zugesetzt. Die Polymerisationstemperatur wird dabei auf 125 bis 130 °C gehalten. Anschließend werden 10 Teile BG zugesetzt und 2 Stunden bei 130 bis 135 °C nachpolymerisiert. Die erhaltene heiße Polymerisatlösung wird mit 10 Teilen DPM verdünnt und bei ca. 50 °C mit 106 Teilen Wasser und 3,5 Teilen NH$_3$ konz. etwa 30 Minuten intensiv gerührt.

Nach dem Erkalten erhält man eine bei 23 °C zunächst viskose milchigtrübe Flüssigkeit, die beim 20 stündigen Lagern bei 23 °C in eine niedrigviskose, milchigtrübe Dispersion übergeht. Diese wird mit ca. 0,5 Teilen NH$_3$ konz. auf einen pH-Wert von ca. 9,1 nachneutralisiert. Die Kennwerte der Dispersion sind in Tabelle 1 zusammengefaßt.

## Beispiel 2

a) Die noch heiße Copolymerisatlösung des Beispiels 1 wird mit 10 Teilen BG verdünnt und mit 110 Teilen Wasser und 1,2 Teilen NH$_3$ konz. 1/2 Stunde bei 50 °C gerührt. Aus der milchigtrüben, anfangs viskosen Flüssigkeit bildet sich beim 20 stündigen Lagern bei 23 °C eine niedrigviskose milchigtrübe Dispersion, deren Kennwerte in Tabelle 1 unter Beispiel Nr. 2a angegeben sind.

b) Diese Dispersion wird mit 80 Teilen Wasser verdünnt und mit 2,8 Teilen NH$_3$ konz. nachneutrali-

siert. Es entsteht eine stark strukturviskose Dispersion mit den Kennwerten des Beispiels Nr. 2b der Tabelle 1.

c) In Beispiel 2c wird wie in Beispiel 2a verfahren, jedoch nur mit 5 Teilen BG heiß verdünnt und mit 175 Teilen Wasser und 5 Teilen NH$_3$ konz. vermischt. Ergebnisse siehe Tabelle 1.

### Beispiel 3

Zur Herstellung einer heißen Lösung eines Copolymerisats aus 25 Teilen St, 20 Teilen MMA, 51,5 Teilen iBA, 3,5 Teilen As und 1,2 Teilen t-BPB in 30 Teilen BG wird wie in Beispiel 1 verfahren. Die noch heiße Lösung wird mit 10 Teilen DPM verdünnt und sofort anschließend mit 110 Teilen Wasser und 1,4 Teilen NH$_3$ konz. eine halbe Stunde gerührt. Die Kennwerte der 2 Tage bei 23 °C gelagerten Dispersion 3a sind in Tabelle 1 angegeben. Durch Verdünnen der Dispersion 3a mit 45 Teilen 1 %igem Ammoniak erhält man die Dispersion 3b (Tabelle 1).

Zur Herstellung der Dispersion 3c wird wie bei Dispersion 3a verfahren, jedoch DPM durch Wasser ersetzt.

### Beispiel 4

20 % einer Monomerenmischung aus 56 Teilen MMA, 42 Teilen iBA und 2 Teilen ITS in 10 Teilen Xylol werden unter Stickstoff auf 100 °C erwärmt und 10 % einer Initiatorlösung von 1,5 Teilen t-BPB in 10 Teilen Xylol zugegeben. 10 Minuten später werden die restlichen 80 % der obigen Monomerenmischung innerhalb von 2 Stunden und gleichzeitig die restlichen 90 % der Initiatorlösung innerhalb von 2 1/2 Stunden gleichmäßig zugesetzt. Die Polymerisations-temperatur wird dabei auf 125 bis 130 °C gehalten.

Die ITS wird abweichend von den vorhergehenden Polymerisationsbeispielen als Festsubstanz portionsweise in 10 gleichen Anteilen in gleichmäßigen Zeitabständen in das Reaktionsgemisch eingetragen, da sie in der Monomerenmischung unlöslich ist. Anschließend wird 2 Stunden bei 130 bis 135 °C nachpolymerisiert, das enthaltene Xylol im Vakuum abdestilliert und das Polymerisat als Schmelze ausgetragen.

100 Teile dieses Festproduktes werden in 30 Teilen BG bei ca. 50 °C gelöst und mit 138 Teilen Wasser und 2 Teilen NH$_3$ konz. intensiv vermischt. Die abgekühlte Dispersion 4a weist nach 2 tägigem Lagern bei 23 °C die in Tabelle 1 angegebenen Eigenschaften auf.

Beim Nachneutralisieren der Dispersion mit 1,0 Teilen NH$_3$ konz. von pH-Wert 8,3 auf 9,5 bleibt die Viskosität unverändert. Werden 100 Teile der gleichen Monomerenmischung analog zu Beispiel 1 in BG polymerisiert und die Polymerisatlösung anschließend mit 10 Teilen BG, 1,5 Teilen NH$_3$ konz. und 109 Teilen H$_2$O vermischt, so werden die in Tabelle 1 unter 4b genannten Kennwerte für die Dispersion erhalten. Beim Nachneutralisieren dieser Dispersion mit MH$_3$ konz. von pH-Wert 7,6 auf 9,5 findet nur ein relativ geringer Viskositätsanstieg von etwa 50 auf 200 Sekunden Auslaufzeit, gemessen im DIN-Becher mit 6 mm-Düse, statt.

### Beispiel 5

Analog zu Beispiel 1 wird eine Monomerenmischung von 21,5 Teilen St, 14 Teilen MMA, 59 Teilen iBA und 5,5 Teilen As mit 1,2 Teilen t-BPB polymerisiert. Die noch heiße Lösung von 100 Teilen des Copolymerisates in 40 Teilen BG wird mit 94 Teilen Wasser und 0,95 Teilen NH$_3$ konz. 30 Minuten bei ca. 50 °C verrührt. Danach wird mit ca. 0,05 Teilen NH$_3$ konz. zur Anhebung der Viskosität nachneutralisiert. Nach 2 Tagen bei 23 °C weist die entstandene milchigtrübe Dispersion einen pH-Wert von 7,6 und eine Viskosität von ca. 1 Pa. s auf.

Die so erhaltene Dispersion bleibt trotz Fehlens von üblichen Schutzkolloiden und Emulgatoren bei Temperaturen bis etwa − 10 °C und + 30 °C stabil. Eine erhitzte oder unterkühlte und erstarrte Dispersion bildet beim Lagern bei Normaltemperatur die ursprünglichen Fließeigenschaften zurück.

Diese Dispersion bietet als Zwischenform zur Weiterverarbeitung zu Beschichtungsstoffen, bei der das Copolymerisat vor der Pigmentierung durch Zugabe von Ammoniak in eine Lösung überführt wird (vgl. Beispiele 6 bis 9).

Die Kennwerte der erhaltenen Dispersion sind in Tabelle 1 angegeben.

(Siehe die Tabelle 1, Seite 8 f.)

Tabelle 1

Kennwerte der Copolymerisate sowie deren Dispersionen bzw. Lösungen

| Beispiel Nr. | 1 und 2 | | | | 3 | | | 4 | |
|---|---|---|---|---|---|---|---|---|---|
| Copolymerisate: | | | | | | | | | |
| SZ (mg KOH/g Festprodukt) | 31 | | | | 27 | | | 14 | |
| Sw-Wert, berechnet | 169 | | | | 178 | | | 173 | |
| K-Wert (3 %ig in Aceton) | 33 | | | | 31 | | | 28 | |
| Erweichungspunkt, DIN 53180, °C | 100 | | | | 85 | | | 90 | |
| Dispersions-Nr. | 1 | 2a | 2b | 2c | 3a | 3b | 3c | 4a | 4b |
| Lösungs-Nr. | | | | | | | | | |
| Copolymerisatgehalt (%) | 40 | 40 | 30 | 32 | 40 | 34 | 40 | 37 | 40 |
| Lösungsmittel (% auf Polymer) | | | | | | | | | |
| BG | 30 | 40 | 40 | 35 | 30 | 30 | 30 | 30 | 40 |
| DPM | 10 | – | – | – | 10 | 10 | – | – | – |
| pH-Wert | 9,1 | 8,3 | 9,3 | 9,5 | 7,7 | 9,6 | 7,6 | 8,3 | 7,8 |
| Viskosität Pa.s (100 $s^{-1}$) ca | 0,5 | 0,5 | 0,3 | 0,5 | 1,0 | 0,3 | 2,0 | 0,5 | 1 |

II. Anwendungsbeispiele

Pigmentfreie Beschichtungen und Imprägnierungen

Die Dispersionen der Beispiele 1 bis 4 trocknen in Naßschichtdicken bis zu etwa 0,3 mm bei Temperaturen oberhalb etwa 0 °C und bis zu etwa 65 % relativer Feuchte schnell zu klaren, klebfreien Filmen mit guter Haftfestigkeit auf verschiedenen Untergründen, wie z. B. auf Eisen, Aluminium, Zink, mineralischen Untergründen, wie Mauerwerk, saugendem oder glattem Putz sowie alten Anstrichen, Holz und bituminösen Materialien. Bereits die frisch angetrockneten Filme zeichnen sich durch hervorragende Hydrophobie aus. Die durchgetrockneten Filme sind besonders beständig gegen Quellung bei langzeitiger Wasserlagerung sowie gegen wäßrige Alkalilauge und Ammoniak.

Kombination der Copolymerisat-Dispersionen mit Lösungen :

Beispiel 6

127 Teile der Dispersion von Beispiel 5 werden mit 80 Teilen BG und 2,0 Teilen NH₃ konz. verdünnt. Es entsteht eine klare Lösung, in der 600 Teile Rutil und 50 Teile Eisenoxidschwarz 15 Minuten unter kräftigem Rühren dispergiert werden. Während des Dispergiervorgangs werden weitere 5,0 Teile NH₃ konz. zugesetzt. In die hochviskose Pigmentpaste werden 300 Teile Wasser und 2 460 Teile der Dispersion von Beispiel 1 eingerührt. Anschließend wird mit ca. 100 Teilen Wasser auf eine Viskosität von ca. 300 mPa.s ($10^{-4}s^{-1}$) verdünnt. Man erhält eine bei Raumtemperatur schnell trocknende strukturviskose Farbe mit gutem Verlauf.

Die Farbe läßt sich mit einem Rakel einer Spalthöhe von etwa 150 µ aufziehen, ohne an senkrechten Flächen abzulaufen. Der Glanzgrad (60 °-Winkel) beträgt 88 %, der pH-Wert 8,8. Das Copolymerisatverhältnis (dispergiert : gelöst) ist 95 : 5.

Beispiel 7

250 Teile der Dispersion von Beispiel 5 werden mit 80 Teilen BG und 4,5 Teilen NH₃ konz. vermischt. In der erhaltenen Lösung mit pH-Wert ca. 8,5 und einer Viskosität von ca. 800 mPa.s werden 100 Teile Eisenoxidschwarz und 700 Teile Rutil 15 Minuten unter kräftigem Rühren und Zusatz von weiteren 2,5 Teilen NH₃ konz. dispergiert. Die hochviskose Pigmentpaste mit pH-Wert ca. 8,6 wird mit 2 430 Teilen der Dispersion von Beispiel 4 und 10 Teilen Entschäumer vermischt.

Die erhaltene stark strukturviskose Farbe wird mit etwa 100 Teilen Wasser auf eine Viskosität von ca. 300 mPa.s ($10^{-4}s^{-1}$) und einen pH-Wert von 8,6 eingestellt. Ein Aufstrich der Farbe weist einen Glanzgrad von > 85 % auf. Er läuft an senkrechter Fläche in Naßschichtdicken von ca. 0,20 mm nicht ab. Durch Zugabe von 2,7 Teilen $NH_3$ konz. steigt der pH-Wert auf 9,0 an, während das Fließverhalten unverändert bleibt.

## Beispiel 8

250 Teile Dispersion des Beispiels 5 werden mit 70 Teilen BG, 16 Teilen Wasser und 4,5 Teilen $NH_3$ konz. vermischt. In der entstandenen klaren niedrigviskosen Lösung werden 350 Teile Rutil und 50 Teile Eisenoxidschwarz 15 Minuten unter kräftigem Rühren dispergiert. Dabei werden etwa 5 Minuten nach Beginn des Dispergierens weitere 1,5 Teile $NH_3$ konz. zugesetzt. 146 Teile der erhaltenen hochviskosen Pigmentpaste mit pH-Wert 8,6 werden mit 200 Teilen der Dispersion von Beispiel 3c, 20 Teilen Wasser und 2 Teilen Entschäumer vermischt. Die hochviskose Farbe wird mit etwa 10 Teilen Wasser und 0,1 Teilen $NH_3$ konz. auf eine Viskosität von ca. 2 000 mPa.s und einen pH-Wert von ca. 8,5 eingestellt. Die aufgestrichene Farbe hat einen Glanzgrad von über 80 %. Sie läßt sich mit einer Spaltöhe von über 0,25 mm auf Aluminiumblech aufziehen, ohne auf der senkrechten Fläche beim Trocknen abzulaufen.

## Beispiel 9

250 Teile Dispersion von Beispiel 5 werden mit 50 Teilen BG, 4,4 Teilen $NH_3$ konz., 21 Teilen Wasser und 20 Teilen eines niedrigviskosen Chlorparaffins (42 % Chlorgehalt) in eine nahezu klare Lösung mit pH-Wert etwa 8,3 umgewandet. In dieser Lösung werden 400 Teile Rutil wie in Beispiel 12 unter Zugabe von weiteren 1,5 Teilen $NH_3$ konz. dispergiert. Die viskose Pigmentpaste mit pH-Wert 8,4 wird mit 760 Teilen Dispersion von Beispiel 3a, 2 000 Teilen grobem Calcit (Teilchendurchmesser 0,05 bis 0,5 mm) und 400 Teilen feinem Calcit, 200 Teilen Wasser und anschliessend 200 Teilen Calcit, 200 Teilen Wasser und anschliessend 200 Teilen einer 10 %igen Paste von Montmorillonit in Wasser vermengt. Man erhält eine pastöse, nicht fließende Masse für dickschichtige Beschichtungen, z. B. auf Mauerwerk.

## Beispiel 10

Analog zu Beispiel 9, jedoch mit 480 Teilen Kristobalithmehl und 480 Teilen Microcalcit als Füllstoffe, 80 Teilen zusätzlichem Wasser und nur 100 Teilen 10 %iger Montmorillonitpaste, wird eine Straßenmarkierungsfarbe erhalten, die sich durch schnelle Trocknung und gute Naßhaftestigkeit auszeichnet.

## Patentansprüche

1. Verfahren zur Herstellung von lösungsmittelhaltigen, wasserverdünnbaren, physikalisch trocknenden Bindemitteln für Beschichtungs- und Imprägnierstoffe auf der Basis von Copolymerisaten, die im wesentlichen bestehen aus copolymerisierten Einheiten von

a) 80 bis 98,5 Gew.% mindestens eines Esters der Acrylsäure oder Methacrylsäure mit einem 1 bis 14 Kohlenstoffatome enthaltenden geradkettigen oder verzweigten Monoalkanol, wobei diese (Meth-)acrylsäureester bis zu 65 Gew.-% durch Vinylaromaten, copolymerisierbare Vinylester mit 4 bis 14 Kohlenstoffatomen oder copolymerisierbare olefinisch ungesättigte Dicarbonsäurediester mit 6 bis 32 Kohlenstoffatom ersetzt sein können,

b) 1,5 bis 20 Gew.% mindestens einer copolymerisierbaren, olefinisch ungesättigten 3 bis 10 Kohlenstoffatome enthaltenden organischen Verbindung mit mindestens einer Carboxyl- oder Carbonsäureanhydridgruppe und

c) 0 bis 5 Gew.% weiterer, unter a) und b) nicht genannter copolymerisierbarer olefinisch ungesättigter organischer Verbindungen, die eine hydrophile Gruppe aufweisen,

mit der Maßgabe, daß die Summe der unter a) bis c) genannten Prozentzahlen gleich 100 ist, unter Verwendung von mit Wasser zumindest teilweise mischbaren organischen Lösungsmitteln und Ammoniak als Neutralisationsmittel, dadurch gekennzeichnet, daß das Copolymerisat die Komponenten a), b) und c) in einem solchen Verhältnis einpolymerisiert enthält, daß das Copolymerisat der Formel

$$100 \cdot \log SZ + 1,6 \cdot \Sigma E = Sw$$

entspricht, worin SZ die Säurezahl in mg KOH/g Copolymerisat und $\Sigma E$ die Summe des Anteils an Estergruppen E in Gew.% im Copolymerisat bedeuten, wobei E für Ester (a) der in $\alpha$-Stellung verzweigten Alkanole mit dem Faktor 0,7 bzw. für Ester (a) der in $\beta$-Stellung verzweigten Alkanole mit dem Faktor 0,8 zu multiplizieren ist, einen Wert für Sw zwischen 155 und 179, einen K-Wert nach DIN 53 726 zwischen 23 und 60 und einen Erweichungspunkt nach DIN 53 180 zwischen 55 und 160 °C aufweist, in 15 bis 70 Gew.%, bezogen auf Copolymerisat, eines flüchtigen wassermischbaren Glykolethers mit einer primären Hydroxylgruppe, mindestens 6 Kohlen-stoffatomen sowie einem Verhältnis von Kohlenstoffatomen zu Sauerstoffatomen von mindestens 2,3 gelöst und durch Vermischen mit Ammoniak und Wasser in eine wäßrige Dispersion überführt wird.

2. Verfahren nach Anspruch 1, dadurch gekennzeichnet, daß 99 bis 25 Gew.% des Copolymerisats mit

9

einem Wert für Sw zwischen 155 und 179 in Form der wäßrigen Dispersion mit 1 bis 75 Gew.% eines Copolymerisats, das einen K-Wert nach DIN 53 726 zwischen 10 und 45 sowie einen Wert für Sw zwischen 185 und 230 aufweist und gegebenenfalls durch Zugabe von Ammoniak in eine Lösung überführt wurde, kombiniert werden.

3. Verwendung der gemäß einem der vorhergehenden Ansprüche hergestellten Bindemittel zur Herstellung physikalisch trocknender Beschichtungs- und Imprägnierstoffe.

## Claims

1. A process for the preparation of solvent-containing, waterdilutable, physically drying binders for coating and impregnating materials, which are based on copolymers essentially containing, as copolymerized units,

a) 80 to 98.5 % by weight of at least one ester of acrylic acid or methacrylic acid with a linear or branched monoalkanol of 1 to 14 carbon atoms, it being possible for up to 65 % by weight of this acrylic or methacrylic acid ester to be replaced by vinylaromatics, copolymerizable vinyl esters of 4 to 14 carbon atoms, or copolymerizable olefinically unsaturated dicarboxylic acid diesters of 6 to 32 carbon atoms,

b) 1.5 to 20 % by weight of at least one copolymerisable olefinically unsaturated organic compound containing 3 to 10 carbon atoms and at least one carboxyl or carboxylic acid anhydride group, and

c) 0 to 5% by weight of further copolymerizable olefinically unsaturated organic compounds which have a hydrophilic group and are not specified under a) and b),

with the proviso that the sum of the percentages indicated under a) to c) is 100, using organic solvents which are at least partially miscible with water, and ammonia as neutralizing agents, wherein the copolymer contains copolymerized units of components a), b) and c) in such a ratio that the copolymer has the formula

$$100 \times \log AN + 1.6 \times \Sigma E = Sw,$$

where AN is the acid number in mg KOH/g copolymer, $\Sigma E$ is the sum of the amounts of ester groups E in percent by weight contained in the copolymer, it being necessary to multiply E by a factor of 0.7 in the case of ester(s) (a) of alkanols branched in the $\alpha$-position, and by a factor of 0.8 in the case of ester(s) (a) of alkanols branched in the $\beta$-position, and Sw has a value of from 155 to 179 ; and wherein the copolymer has a K value according to DIN 53, 726 of from 23 to 60 amd a softening temperature according to DIN 53, 180 of from 55 to 160 °C, is dissolved in 15 to 70 % by weight, based on the copolymer, of a volatile, water-miscible glycol ether having a primary hydroxyl group, at least 6 carbon atoms and a ratio of carbon atoms to oxygen atoms of at least 2.3 : 1, and is converted into an aqueous dispersion by mixing with ammonia and water.

2. A process as claimed in claim 1, wherein from 99 to 25 % by weight of the copolymer, where Sw has a value of from 155 to 179, in the form of the aqueous dispersion is combined with from 1 to 75 % by weight of a copolymer where Sw has a value of from 185 to 230 and which has a K value according to DIN 53, 726 of from 10 to 45 and may or may not have been converted into a solution by the addition of ammonia.

3. The use of a binder prepared as claimed in either of the preceding claims for the production of physically drying coating and impregnating materials.

## Revendications

1. Procédé de préparation de liants contenant des solvants, pouvant être dilués par de l'eau et séchant physiquement, pour compositions d'enduction et d'imprégnation, à base de copolymérisats constitués essentiellement d'unités copolymérisées de

a) 80 à 98,5 % en poids d'au moins un ester de l'acide acrylique ou de l'acide méthacrylique et d'un monoalcanol en $C_1$ à $C_{14}$ à chaîne droite ou ramifiée, jusqu'à 65 % en poids de ces esters (méth)acryliques pouvant éventuellement être remplacés par des composés vinyl-aromatiques, des esters vinyliques en $C_4$ à $C_{14}$ copolymérisables ou des diesters d'acides dicarboxyliques en $C_6$ à $C_{32}$ à insaturation oléfinique copolymérisables,

b) 1,5 à 20 % en poids d'au moins un composé organique en $C_3$ à $C_{10}$ à insaturation oléfinique, comportant au moins un groupe carboxyle ou anhydride carboxylique, copolymérisable et

c) 0 à 5 % en poids d'autres composés organiques à insaturation oléfinique copolymérisables, comportant un groupe hydrophile, non cités sub a) et b),

la somme des pourcentages de a), de b) et de c) étant égale à 100, utilisant des solvants organiques au moins partiellement miscibles à l'eau et l'ammoniac comme agent neutralisant, caractérisé en ce que les composants a), b) et c) sont copolymérisés dans le copolymérisat en des proportions telles que le copolymérisat correspond à la formule

$$100 \cdot \log SZ + 1,6 \cdot \Sigma E = Sw,$$

dans laquelle SZ est l'indice d'acide (en mg de KOH par g de copolymérisat) et ΣE est la somme E des fractions à groupes ester (en % en poids) dans le copolymérisat, cette valeur E étant à multiplier par le facteur 0,7 pour les esters a) d'alcanols ramifiés en position α et par le facteur 0,8 pour les esters a) d'alcanols ramifiés en position β, Sw étant un nombre compris entre 155 et 179, le copolymérisat possédant une valeur K (selon la norme DIN 53 726) comprise entre 23 et 60 et un point de ramollissement (selon la norme DIN 53 180) entre 55 et 160 °C, le copolymérisat étant dissous dans 15 à 70 % de son poids d'un éther de glycol volatil, miscible à l'eau, comprenant un groupe hydroxyle primaire et au moins six atomes de carbone, le rapport atomes de carbone-atomes d'oxygène étant au moins égal à 2,3, puis transformé par addition sous agitation d'ammoniac et d'eau en une dispersion aqueuse.

2. Procédé suivant la revendication 1, caractérisé en ce que l'on mélange 99 à 25 % en poids du copolymérisat d'une valeur Sw entre 155 et 179, sous forme de dispersion aqueuse, avec 1 à 75 % en poids d'un copolymérisat d'une valeur Sw entre 185 et 230 et d'une valeur K (d'après la norme DIN 53 726) de 10 à 45, éventuellement mis en solution par addition d'ammoniac.

3. Utilisation de liants préparés par les procédés des revendications précédentes pour la préparation de compositions d'enduction et d'imprégnation séchant physiquement.